(19) Europäisches Patentamt
European Patent Office
Office européen des brevets

(11) **EP 4 361 533 A1**

(12) **EUROPEAN PATENT APPLICATION**
published in accordance with Art. 153(4) EPC

(43) Date of publication:
**01.05.2024  Bulletin 2024/18**

(21) Application number: **21947048.1**

(22) Date of filing: **22.06.2021**

(51) International Patent Classification (IPC):
*F25B 49/02* *(2006.01)*

(52) Cooperative Patent Classification (CPC):
**F25B 49/02**

(86) International application number:
**PCT/JP2021/023630**

(87) International publication number:
**WO 2022/269761 (29.12.2022 Gazette 2022/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Toshiba Carrier Corporation
Kawasaki-Shi,
Kanagawa 212-8585 (JP)**

(72) Inventors:
• **KOMURE, Shinya**
  **Fuji-shi, Shizuoka 416-8521 (JP)**
• **HIRAHARA, Morio**
  **Fuji-shi, Shizuoka 416-8521 (JP)**
• **KIGUCHI, Yukio**
  **Fuji-shi, Shizuoka 416-8521 (JP)**
• **OKAZAKI, Noriomi**
  **Fuji-shi, Shizuoka 416-8521 (JP)**

(74) Representative: **Gramm, Lins & Partner
Patent- und Rechtsanwälte PartGmbB
Frankfurter Straße 3c
38122 Braunschweig (DE)**

(54) **REFRIGERATION CYCLE DEVICE, REFRIGERANT LEAK DETECTION SYSTEM, AND
INFORMATION PROCESSING DEVICE**

(57)    A refrigeration cycle apparatus includes an air conditioner, sensors, an opening prediction unit, a prediction error calculation unit, a prediction error correction unit, and a leak detection unit. The opening prediction unit determines a predicted opening of the electronic expansion valve of the air conditioner based on outputs of the sensors and an operation frequency of the compressor, assuming normal operation of the air conditioner. The prediction error calculation unit calculates a prediction error by subtracting a measured opening of the electronic expansion valve from the predicted opening. The prediction error correction unit calculates multiple prediction errors in advance, calculates an offset value as an average of the multiple prediction error, and outputs a corrected prediction error by subtracting the offset value from the current prediction error. The leak detection unit detects a refrigerant leak of the air conditioner based on the corrected prediction error.

FIG. 3

EP 4 361 533 A1

## Description

### FIELD

Embodiments described herein relate generally to a refrigeration cycle apparatus, a refrigerant leak detection system, and an information processing apparatus.

### BACKGROUND

In a refrigeration cycle in which refrigerant is discharged from a compressor, passes through a condenser, an electronic expansion valve (e.g., actuator), and an evaporator and returns to the compressor, the refrigerant may leak due to loosening of the piping through which the refrigerant passes or deterioration of the components. when the amount of gasification in the evaporator (low pressure side) is automatically controlled by an opening of the expansion valve, the leak of refrigerant will cause the opening of the expansion valve to increase for maintaining the flow rate of refrigerant. A possible method of detecting such refrigerant leak is to use the opening degree of the expansion valve.

However, in general, there are individual differences in the flow characteristics of the electronic expansion valve of air conditioners due to manufacturing errors and the installation environment. Therefore, even if the opening degree of the expansion valve is the same, the flow rate of the refrigerant may differ among different individuals. Accordingly, when the same threshold value is used for all electronic expansion valves, false detection of refrigerant leaks or detection missing may occur.

The purpose of this embodiment of the invention is to detect refrigerant leak accurately by considering individual difference of the electronic expansion valve.

### Citation List

### Patent Document

Patent Document 1: WO 2015/125509 A1

### Summary of Invention

### Problem to be solved by Invention

The purpose of the present invention is to provide a refrigeration cycle apparatus, a refrigerant leak detection system, and an information processing apparatus that can accurately detect a refrigerant leak by considering individual difference of an electronic expansion valve.

### Solution to Problem

To solve the above problem, the refrigerant cycle apparatus according to an aspect of the present invention includes an air conditioner, a plurality of sensors, an opening prediction unit, a prediction error calculation unit, a prediction error correction unit, and a leak detection unit. The air conditioner has a compressor, a condenser, an electronic expansion valve, and an evaporator. The plurality of sensors detects discharged gas temperature, sucked gas temperature, evaporation pressure, and condensation pressure of the air conditioner. The opening prediction unit determines a predicted opening of the electronic expansion valve at a predetermined sampling interval, based on outputs of the plurality of sensors and an operation frequency of the compressor, assuming normal operation of the air conditioner. The prediction error calculation unit calculates a prediction error by subtracting a measured opening of the electronic expansion valve from the predicted opening at the predetermined sampling interval. The prediction error correction unit calculates multiple prediction errors for offset calculation using data for a predetermined number of sampling times in advance, calculates an offset value as an average of the multiple prediction errors for the offset calculation, and outputs a corrected prediction error by subtracting the offset value from the current prediction error. The leak detection unit detects a refrigerant leak of the air conditioner based on the corrected prediction error.

The multiple prediction errors for the offset calculation may follow a normal distribution. The prediction error correction unit may determine the predetermined number of sampling times according to an allowable range of an error of a population mean relative to a sample mean of the multiple prediction errors.

The prediction error correction unit may output a moving average of the corrected prediction errors over a predetermined period as the corrected prediction error.

The leak detection unit may detect that a refrigerant of the air conditioner has leaked when the corrected prediction error output by the prediction error correction unit is greater than a detection threshold for a predetermined number of consecutive times greater than or equal to a number threshold.

The opening prediction unit may be configured to construct a generalized trained model in advance in which the outputs of the plurality of sensors of a plurality of other air conditioners and the operation frequency of the compressor of the other air conditioners are used as learning data on an input side and measured openings of the electronic expansion valve of the other air conditioners corresponding to the learning data during normal operation are used as teaching data on an output side. Then, the opening prediction unit generates a current predicted opening assuming normal operation of the air conditioner by inputting a current output of the plurality of sensors of the air conditioner and a current operation frequency of the compressor of the air conditioner to the generalized trained model.

The opening prediction unit may be configured to construct a dedicated trained model for the air conditioner by re-learning the generalized trained model and updating parameters of the generalized trained model in which outputs of the plurality of sensors of the air conditioner and the operation frequency of the compressor of the air conditioner for a second predetermined number of sampling times are used as the learning data on the input side and measured openings of the electronic expansion valve of the air conditioner during normal operation corresponding to the learning data are used as the teaching data on the output side. Then, the opening prediction unit generates the current predicted opening assuming normal operation of the air conditioner by inputting the current output of the plurality of sensors of the air conditioner and the current operation frequency of the compressor of the air conditioner to the dedicated trained model.

A refrigerant leak detection system according to an embodiment includes a refrigeration cycle apparatus having an air conditioner that includes a compressor, a condenser, an electronic expansion valve, and an evaporator, and a plurality of sensors that detects discharged gas temperature, sucked gas temperature, evaporation pressure, and condensation pressure of the air conditioner; and an information processing apparatus communicably connected to the refrigeration cycle device via a network. At least one of the refrigeration cycle apparatus and the information processing apparatus has an opening prediction unit configured to determine a predicted opening of the electronic expansion valve at a predetermined sampling interval, based on outputs of the plurality of sensors and an operation frequency of the compressor, assuming normal operation of the air conditioner. The at least one of the refrigeration cycle apparatus and the information processing apparatus has a prediction error calculation unit configured to calculate a prediction error by subtracting a measured opening of the electronic expansion valve from the predicted opening at the predetermined sampling interval. The at least one of the refrigeration cycle apparatus and the information processing apparatus has a prediction error correction unit configured to calculate multiple prediction errors for offset calculation using data for a predetermined number of sampling times in advance, calculate an offset value as an average of the multiple prediction errors for the offset calculation, and output a corrected prediction error by subtracting the offset value from the current prediction error. The at least one of the refrigeration cycle apparatus and the information processing apparatus has a leak detection unit configured to detect a refrigerant leak of the air conditioner based on the corrected prediction error.

An information processing apparatus according to an embodiment acquires, via a network, operation data of an air conditioner from a refrigeration cycle apparatus that includes the air conditioner having a compressor, a condenser, an electronic expansion valve, and an evaporator. The information processing apparatus includes an opening prediction unit. The opening prediction unit is configured to construct a generalized trained model in advance in which discharged gas temperature, sucked gas temperature, evaporation pressure, condensation pressure, and an operation frequency of the compressor of a plurality of other air conditioners are used as learning data on an input side and measured openings of the electronic expansion valve of the other air conditioners corresponding to the learning data during normal operation are used as teaching data on an output side, and provide the generalized learned model to the air conditioner via the network. The opening prediction unit is further configured to, from the air conditioner via the network, acquire discharged gas temperature, sucked gas temperature, evaporation pressure, condensation pressure, and an operation frequency of the compressor of the air conditioner for a multiple number of sampling times for the learning data on the input side, and acquire measured openings of the electronic expansion valve of the air conditioner during normal operation corresponding to the learning data for the teaching data on the output side. The opening prediction unit is still further configured to construct a dedicated trained model for the air conditioner by re-learning the generalized trained model and updating parameters of the generalized trained model using the acquired learning data and teaching data as training data set. Then, the opening prediction unit provides the dedicated learned model or the updated parameters to the air conditioner via the network. The refrigeration cycle apparatus includes a conditioner-side opening prediction unit, a prediction error calculation unit, a prediction error correction unit, and a leak detection unit. The conditioner-side opening prediction unit is configured to generate a current predicted opening assuming normal operation of the air conditioner by inputting a current discharged gas temperature, current sucked gas temperature, current evaporation pressure, and current condensation pressure of the air conditioner and a current operation frequency of the compressor of the air conditioner to the dedicated trained model acquired from the opening prediction unit of the information processing apparatus or the dedicated trained model generated according to the updated parameters acquired from the opening prediction unit of the information processing apparatus. Thea prediction error calculation unit is configured to calculate a prediction error by subtracting a measured opening of the electronic expansion valve from the predicted opening at the predetermined sampling interval. The prediction error correction unit is configured to calculate multiple prediction errors for offset calculation using data for a predetermined number of sampling times in advance, calculate an offset value as an average of the multiple prediction errors for the offset calculation, and output a corrected prediction error by subtracting the offset value from the current prediction error. The leak detection unit is configured to detect a refrigerant leak of the air conditioner based on the corrected prediction error.

**Effects of The Invention**

According to the present invention, refrigerant leak can be detected accurately by considering individual difference of an electronic expansion valve.

**Brief Description of Drawings**

[Fig. 1] a block diagram showing an example of a refrigerant leak detection system according to an embodiment of the present invention.
[Fig. 2] an explanatory diagram showing an example of a processing circuitry according to an embodiment.
[Fig. 3] an explanatory diagram showing an example of a prediction error ΔPMV.
[Fig. 4] a flowchart showing an example of a procedure in which the processor of the processing circuitry accurately detects a leak of the refrigerant by considering individual difference of an electronic expansion valve.
[Fig. 5] an explanatory diagram showing an example of a deviation of prediction error distribution due to individual differences in electronic expansion valves.
[Fig. 6] an explanatory diagram showing a correction process of prediction error ΔPMV using offset values by the prediction error correction function.
[Fig. 7] an explanatory diagram showing an example of a relationship between a corrected prediction error ΔPMV_corr and its moving average value ΔPMV_ave.
[Fig. 8] an explanatory diagram showing an example of a refrigerant leak detection method based on the corrected prediction error ΔPMV_corr or ΔPMV_ave.
[Fig. 9] an explanatory diagram showing an example of data flow during training of a generalized trained model using the opening prediction function.
[Fig. 10] an explanatory diagram showing an example of data flow during operation of the generalized trained model using the opening prediction function.
[Fig. 11] an explanatory diagram showing an example of data flow during training of a dedicated trained model using the opening prediction function.
[Fig. 12] an explanatory diagram showing an example of data flow during operation of the dedicated trained model using an opening prediction function.

**Description of Embodiments**

Hereinbelow, a description will be given of a refrigeration cycle apparatus, a refrigerant leak detection system, and an information processing apparatus according to embodiments of the present invention with reference to the drawings.

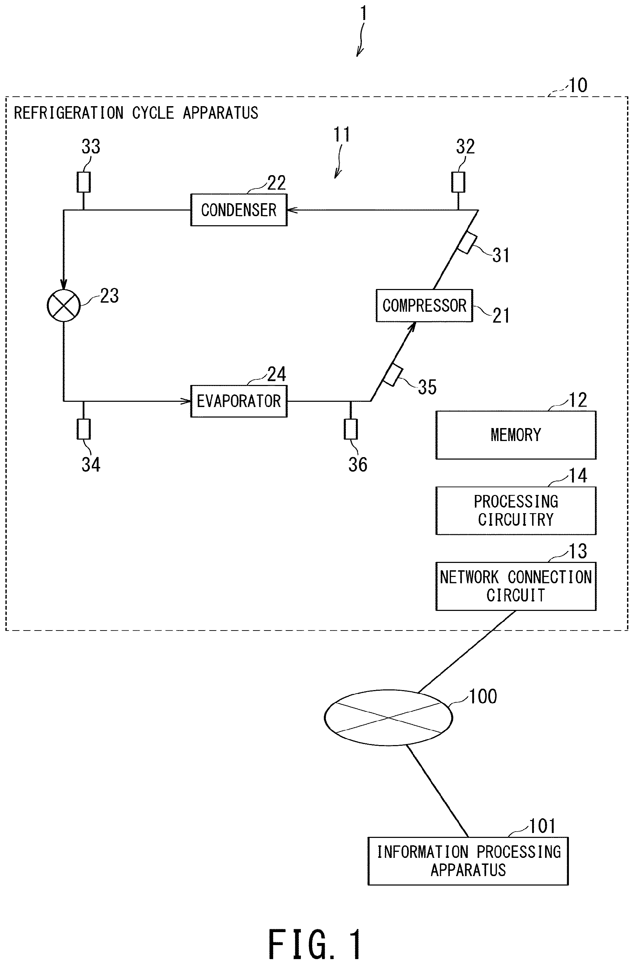

Fig. 1 is a block diagram showing an example of a refrigerant leak detection system 1 according to an embodiment of the present invention. The refrigerant leak detection system 1 has a refrigeration cycle apparatus 10 and an information processing apparatus 101 connected to each other via network 100.
The refrigeration cycle apparatus 10 includes an air conditioner 11 that is the target of the refrigerant leak detection, a memory 12, a network connection circuit 13, and a processing circuitry 14. As shown in Fig. 1, the air conditioner 11 has a compressor 21, a condenser 22, an electronic expansion valve 23, and an evaporator 24.
The compressor 21, the condenser 22, the electronic expansion valve 23, and the evaporator 24 are connected sequentially by refrigerant piping to form a refrigeration cycle in which the refrigerant circulates in a circular manner. R410A or R32 can be used as the refrigerant, for example.
The compressor 21 sucks in refrigerant, compresses the sucked refrigerant, and discharges it with high-temperature and high-pressure. The high-temperature, high-pressure refrigerant discharged from the compressor 21 dissipates heat and condenses through heat exchange in the condenser 22. The condensed refrigerant is decompressed by the electronic expansion valve 23 to be low-temperature and low-pressure. The low-temperature, low-pressure refrigerant is evaporated and cooled through heat exchange in the evaporator 24. The evaporated and gasified refrigerant is returned to the compressor 21 through an accumulator not shown in the figure.

The refrigerant piping on the discharge side of the compressor 21 is provided with a discharge temperature sensor 31 and a discharge pressure sensor 32. The refrigerant piping on the output side of condenser 22 is provided with a condensation pressure sensor 33. The refrigerant piping on the input side of the evaporator 24 is provided with an evaporation pressure sensor 34. The refrigerant piping on the inlet side of the compressor 21 is provided with a suction temperature sensor 35 and a suction pressure sensor 36. The detected values of these sensors 31-36 are input to the processing circuitry 14. The processing circuitry 14 controls the operation frequency of the compressor 21 and the opening degree of the electronic expansion valve 23 based on the detected values of the sensors 31-36. The refrigeration cycle apparatus 10 may also be provided with other sensors, such as a condensation temperature sensor provided on the refrigerant piping on the output side of the condenser 22 or an evaporation temperature sensor provided on the refrigerant piping on the input side of the evaporator 24.

The electronic expansion valve 23 includes an actuator. The opening of the electronic expansion valve 23 is controlled to maintain a constant flow rate of the refrigerant. Specifically, the opening of the electronic expansion valve 23 is automatically controlled such that the difference (superheat) between the saturated gas temperature (evaporation temperature)of the refrigerant estimated from the gas pressure in the evaporator 24 and the temperature of the gas to be sucked (suction temperature) right before the compressor 21 becomes a predetermined temperature (for example, 10 degrees). The amount of gasification in the evaporator 24 is controlled by controlling the opening of the electronic expansion valve 23.

Refrigerant may leak due to loosening of the piping through which the refrigerant passes or deterioration of each component. When refrigerant leaks, the liquid density at the inlet side of the electronic expansion valve 23 decreases regardless of the leak location. In this case, in order to maintain a constant expansion valve flow rate of the refrigerant and the above-mentioned gas temperature difference, the opening of the expansion valve is increased to increase the refrigerant outflow cross-sectional area.

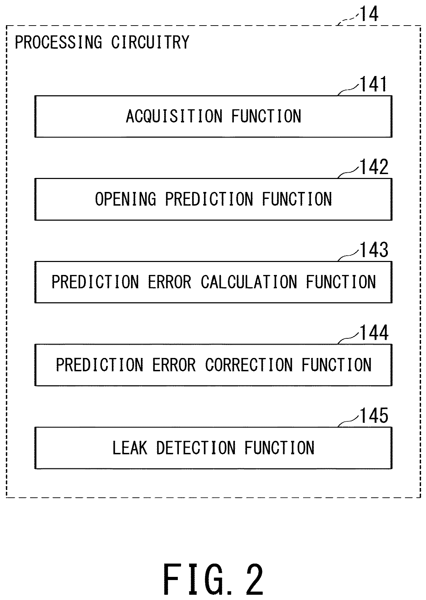

Therefore, refrigerant leak can be detected by predicting the expansion valve opening assuming that the operation is normal and no refrigerant leak is occurring, and comparing the current predicted expansion valve opening predicted based on the assumption of such normal operation (hereinafter referred to as "normal operation predicted opening") with the current actual expansion valve opening (hereinafter referred to as "measured opening"). Meanwhile, there are individual differences in the flow characteristics of the electronic expansion valve 23. Thus, if the normal operation predicted opening is calculated without considering these individual differences, false detection of refrigerant leak or detection missing may occur. The processing circuitry 14 according to an embodiment detects refrigerant leak by considering the individual difference of the electronic expansion valve 23. The configuration and operation of the processing circuitry 14 are described below using Figs. 2-12.

The memory 12 has a configuration that includes, for example, a semiconductor memory element such as RAM (Random Access Memory), flash memory and the like, a hard disk, an optical disk, or other storage media that can be read by a processor, and stores programs, parameter data, and other data used by the processing circuitry 14. Some or all of the programs and data in the recording medium of the memory 12 may be downloaded from other device including information processing apparatus 101, through communication via the network 100, or may be given to the memory 12 via a portable storage medium such as an optical disk.

The network connection circuit 13 implements various information communication protocols according to the form of the network 100. The network connection circuit 13 connects to the information processing apparatus 101 via the network 100 according to these various protocols. The network 100 refers to all information communication networks using telecommunication technology, and includes wireless/wired LAN and Internet networks, as well as telephone communication line networks, optical fiber communication networks, cable communication networks, and satellite communication networks.

Fig. 2 is an explanatory diagram showing an example of a processing circuitry 14 according to an embodiment.

The processing circuitry 14 realizes the function of overall control of the refrigeration cycle apparatus 10. The processing circuitry 14 is a processor that reads and executes a program stored in the memory 12 to execute a process to accurately detect refrigerant leak by taking account of individual differences in the electronic expansion valve 23.

As shown in Fig. 2, the processor of the processing circuitry 14 realizes an acquisition function 141, an opening prediction function 142, a prediction error calculation function 143, a prediction error correction function 144, and a leak detection function 145. Each of these functions is stored in the memory 12 in the form of a program.

The acquisition function 141 acquires the discharged gas temperature from the discharge temperature sensor 31, the sucked gas temperature from the suction temperature sensor 35, the evaporation pressure from the evaporation pressure sensor 34, and the condensation pressure from the condensation pressure sensor 33, respectively.

The opening prediction function 142 is configured to determine, at predetermined sampling intervals, the normal operation predicted opening PMV_pred of the air conditioner 11 (predicted opening degree of the electronic expansion valve 23 assuming the operation to be normal) based on the discharged gas temperature, sucked gas temperature, evaporation pressure, condensation pressure, and the operating frequency of the compressor 21.

The discharged gas temperature, sucked gas temperature, evaporation pressure, condensation pressure, and the operation frequency of the compressor 21 used for determining the normal operation predicted opening PMV_pred may be obtained from the most recent data obtained at the most recent sampling timing, or from smoothed data using past data or estimated future data.

From the operation principle of an expansion valve flow control, it is known that at least the expansion valve inlet pressure, the expansion valve outlet pressure, the operation frequency of the compressor 21, and the sucked gas temperature are required for predicting the opening degree of the expansion valve, which controls the superheat (temperature difference between the sucked gas temperature and the evaporation temperature) under conditions of having constant refrigerant volume. Other sensor or control information may be used depending on the refrigeration cycle configuration and expansion valve control specifications. In the present embodiment, the discharged gas temperature, sucked gas temperature, evaporation pressure as the expansion valve outlet pressure, condensation pressure as the expansion valve inlet pressure, and the operation frequency of the compressor 21 are used to determine the normal operation predicted opening PMV_pred.

The opening degree prediction process may use, for example, a look-up table or a single function that associates the discharged gas temperature, sucked gas temperature, evaporation pressure, condensation pressure, and the operating frequency of the compressor 21 with the normal operation predicted opening PMV_pred. Such look-up tables or a function can be generated based on the operation data of many other air conditioners.

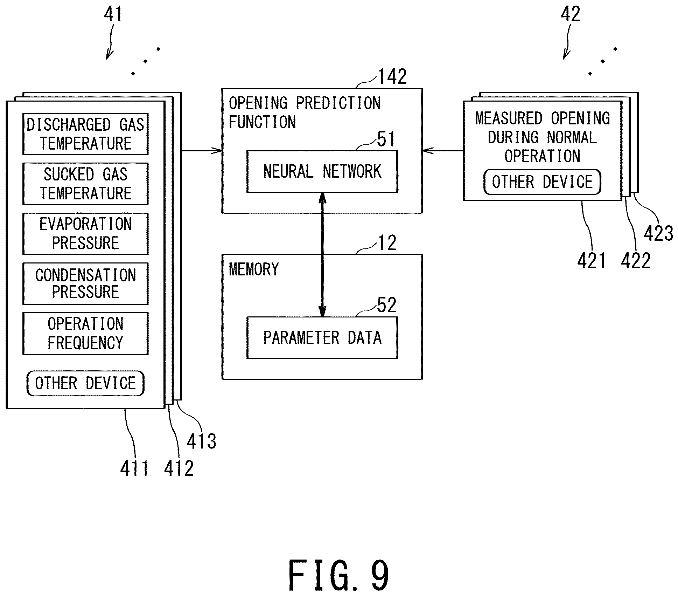

A trained model constructed by machine learning may also be used for the opening degree prediction process. The data used for machine learning can be, for example, operation data from many other air conditioners. The trained model can be based on various machine learning methods such as neural networks, logistic regression, decision trees, random forests, SVM, boosting, or a combination thereof. Deep learning using multi-layer neural networks, such as CNN (Convolutional Neural Network) or CDBN (Convolutional Deep Belief Network), may also be used as machine learning. The case in which deep learning is used for the opening prediction process performed by the opening prediction function 142 is described below in detail using Figs 9-12.

The prediction error calculation function 143 calculates, at a predetermined sampling interval, the prediction error ΔPMV by subtracting the measured opening PMV_fact of the electronic expansion valve 23 from the normal operation predicted opening PMV_pred.

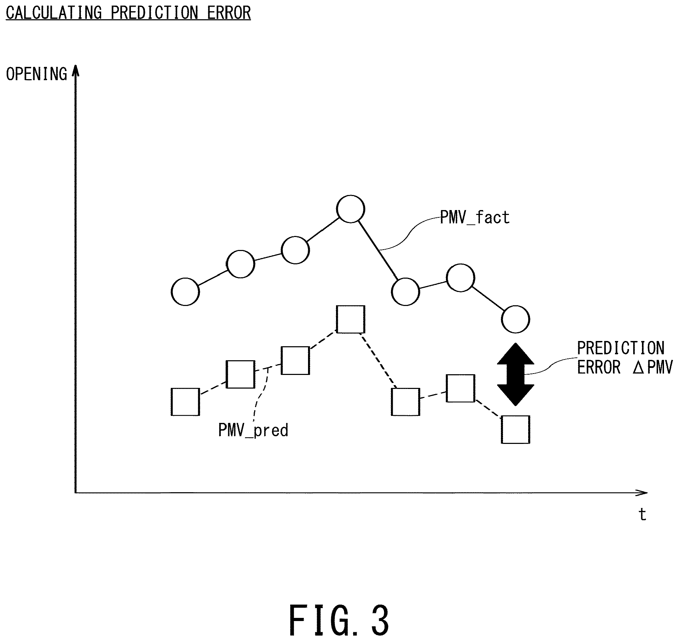

Fig. 3 is an explanatory diagram showing an example of a prediction error ΔPMV. As shown in Fig. 3, the prediction error calculation function 143 calculates the prediction error ΔPMV for each sampling timing by subtracting the measured opening PMV_fact of the electronic expansion valve 23 from the normal operation predicted opening PMV_pred. As the measured opening PMV_fact, only the most recent data obtained at the most recent sampling timing may be used, or smoothed data using past data or estimated future data may be used.

The prediction error correction function 144 calculates the offset value PMV_offset as the average of multiple prediction errors ΔPMVs for offset calculation, which is calculated in advance by the prediction error calculation function 143 based on the data of a predetermined number of sampling times. The prediction error correction function 144 then subtracts the offset value PMV_offset from the current prediction error ΔPMV to obtain and output a corrected prediction error ΔPMV_corr that takes account of individual differences in the electronic expansion valve 23.

The leak detection function 145 detects refrigerant leaks of the air conditioner 11 based on the corrected prediction error ΔPMV_corr.

In the following description, an example in which each function 141-145 is realized by the processing circuitry 14 of the refrigeration cycle apparatus 10 will be described. However, some or all of these functions 141-145 can be realized by an external device, which is independent of the regeneration cycle apparatus 10 and has at least a processor and a memory, such as the information processing apparatus 101, cloud console, server, or workstation connected to the network 100. The information processing apparatus 101 and the cloud console are examples of an information processing apparatus as recited in the claims.

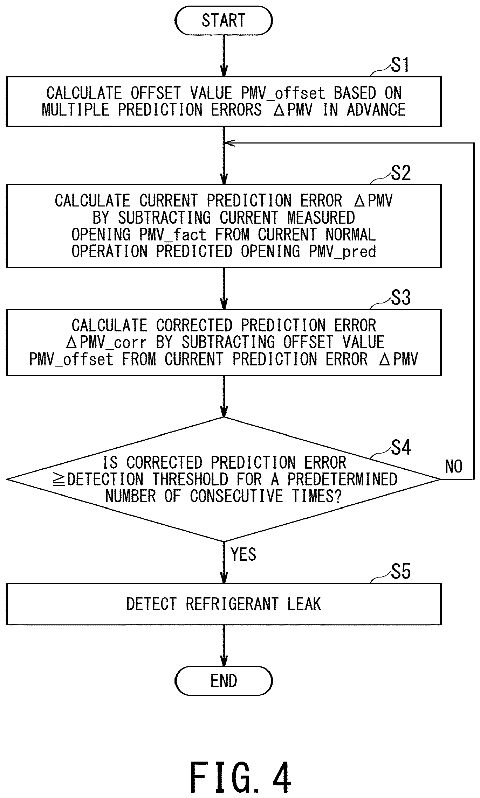

Fig. 4 is a flowchart showing an example of a procedure in which the processor of the processing circuitry 14 accurately detects a leak of the refrigerant by taking account of individual difference of the electronic expansion valve 23. In Fig. 4, reference numerals with numbers attached to S indicates each step of the flowchart.

First, in step S1, the prediction error correction function 144 calculate in advance multiple prediction errors ΔPMVs for offset calculation with a predetermined sample size, and calculates the offset value PMV_offset as the average of the multiple prediction errors ΔPMVs for the offset calculation.

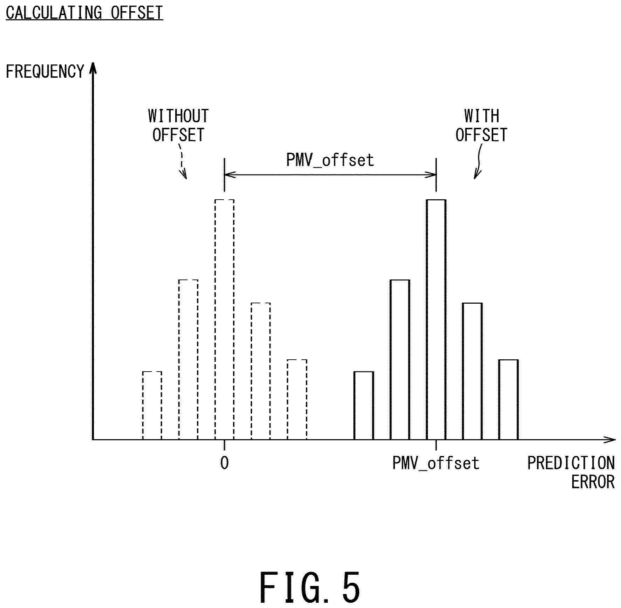

Fig. 5 is an explanatory diagram showing an example of a deviation of prediction error distribution due to individual differences in the electronic expansion valve 23. As mentioned above, the opening degree prediction process uses lookup tables, a certain function, and a trained model using machine learning, which are generated from the operation data of many other air conditioners.

Assuming that there is no individual difference of the electronic expansion valve 23, the opening prediction function 142 can accurately determine the normal operation predicted opening PMV pred by the opening prediction process based on the current discharged gas temperature, current sucked gas temperature, current evaporation pressure, current condensation pressure, and current operation frequency of the compressor 21. In this case, since the normal operation predicted opening PMV pred and the measured opening PMV_fact of the electronic expansion valve 23 are almost identical, when the prediction error ΔPMV follows a normal distribution, the mean of the prediction errors ΔPMVs will be zero (see the dashed histogram in Fig. 5).

In reality, however, there are individual differences in the electronic expansion valve 23 even among products with the same specifications. Thus, for example, an expansion valve A has a flow rate of 251/min when the valve opening degree is 150 pulses and the valve differential pressure is 0.1 MPa, while an expansion valve B has a flow rate of 351/min when the valve opening degree is 150 pulses and the valve differential pressure is 0.1 MPa. Even the opening degree is the same, different individuals may have different refrigerant flow rates.

Therefore, the normal operation predicted opening PMV pred determined by the opening prediction function 142 through the opening prediction process includes deviations from the measured opening PMV_fact of the electronic expansion valve 23, according to individual difference. This means that when the prediction error ΔPMV follows a normal distribution, the mean of the prediction errors ΔPMVs will be the offset value PMV_offset according to individual difference (see the solid histogram in Fig. 5).

Accordingly, the prediction error correction function 144 averages the prediction error ΔPMV of a predetermined number of sampling times in advance to obtain the offset value PMV_offset specific to the electronic expansion valve 23.

When the air conditioner 11 is operating normally, the more sampling times are for calculating the average of the prediction error ΔPMV, the closer the offset value PMV_offset is to the true value. However, the greater the number of sampling times is, the longer the operation period is required, and the greater the possibility of device failure will be during the data collection period, including refrigerant leak, which leads to greater possibility that the offset value PMV_offset may deviate significantly from the true value.

In the present embodiment, the predetermined minimum number of sampling times N required to estimate the offset value PMV_offset is defined from the viewpoint of statistical analysis as follows.

Assuming that the mean value of the population (the population mean) of the prediction error ΔPMV is the true value of the individual differences of the electronic expansion valve (the true value of PMV_offset), it is preferable to determine how many samples from the population are used to calculate the sample mean, so that the error between the population mean and the sample mean is within an allowable range. Then, the prediction error correction function 144 may determine the predetermined number of sampling times based on the allowable range Y of the error of the population mean (true value of PMV_offset) to the sample mean (PMV_offset) of the prediction error ΔPMV.

Assuming that the prediction error ΔPMV follows a normal distribution, the confidence coefficient is K%, the t-value is H, the sample proportion with mean value is P%, and the allowable range of the error of the population mean (true value of PMV_offset) to the sample mean (PMV_offset) of the prediction error ΔPMV is Y, then, the predetermined number N of sampling times is defined by the following equation.

[Eq. 1]

$$N = \left(\frac{2H}{Y}\right)^2 P(1-P) \qquad (1)$$

For example, when the confidence coefficient K is 99%, the t-value H is 2.58, and the sample proportion P is 50%, N = (2.58/Y)^2 according to the equation (1). In this case, when allowable range Y is 100, the number N of sampling times is 666. Therefore, the offset value PMV_offset can be estimated with less than or equal to 10% error with respect to the true value of PMV_offset by calculating the offset value PMV_offset for more than 666 sampling times. This is equivalent to allowing about 5 pulses to deviate from the true value of the offset value when a measurement error of up to +50 pulses derived from individual differences is expected in the predicted value of expansion valve opening.

By determining the predetermined number N of sampling times according to the allowable range Y of the error between the population mean and the sample mean, efficient sampling can be performed without waste.

Next, in step S2, the prediction error calculation function 143 calculates the current prediction error ΔPMV by subtracting the current measured opening PMV_fact of the electronic expansion valve 23 from the current normal operation predicted opening PMV_pred calculated by the opening prediction function 142 (see Fig. 3).

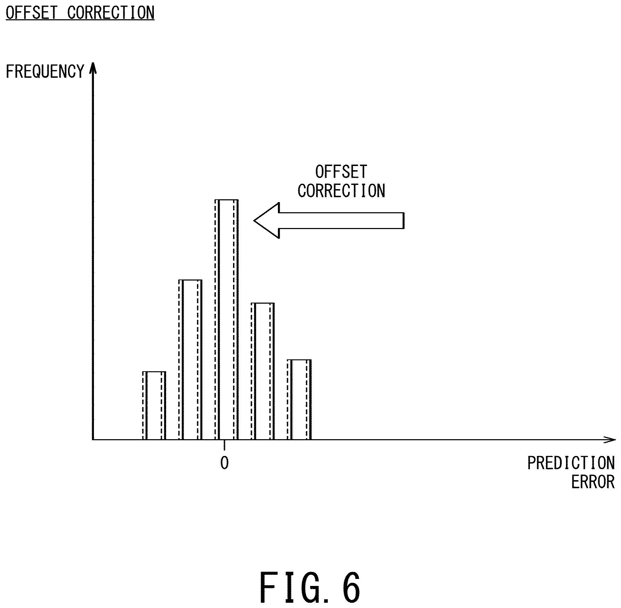

Fig. 6 is an explanatory diagram showing a correction process of prediction error ΔPMV using offset values by the prediction error correction function 144.

The current prediction error ΔPMV calculated by the prediction error calculation function 143 includes a deviation by the offset value PMV_offset according to individual differences.

Therefore, in step S3, the prediction error correction function 144 calculates the corrected prediction error ΔPMV_corr that takes account of the individual differences of the electronic expansion valve 23 by subtracting the previously determined offset value PMV_offset specific to the electronic expansion valve 23 from the current prediction error ΔPMV.

The corrected prediction error ΔPMV_corr is a value that excludes the influence of individual differences contaminated in the prediction error ΔPMV. Therefore, when using the corrected prediction error ΔPMV_corr to detect refrigerant leaks, false detection and detection missing can be significantly reduced compared to a case using the prediction error ΔPMV without correction.

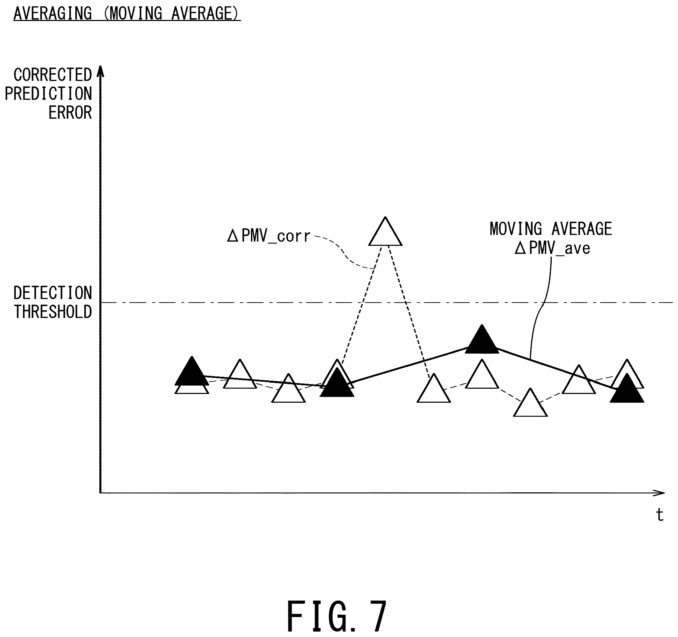

Fig. 7 is an explanatory diagram showing an example of a relationship between a corrected prediction error ΔPMV_corr and its moving average value ΔPMV_ave.

The prediction error correction function 144 may calculate the moving average ΔPMV_ave of the corrected prediction error ΔPMV_corr over a predetermined period and output this value as the corrected prediction error. In this case, the leak detection function 145 detects a refrigerant leak of the air conditioner 11 based on the moving average ΔPMV_ave of the corrected prediction error.

When the operation data of the refrigeration cycle is unstable in a transient state, such as when the operation frequency of the compressor 21 changes abruptly or when there is a time lag for the sucked gas temperature to change, the corrected prediction error ΔPMV_corr may momentarily shift significantly. In this case, the corrected prediction error ΔPMV_corr may exceed the detection threshold in the short term, resulting in false detection of refrigerant leak. By using the moving average of the corrected prediction error ΔPMV_ave to determine refrigerant leak, such influence of short-term instability of the refrigeration cycle operation data can be reduced. Fig. 7 shows an example of using a moving average for every three sampling times.

Next, in step S4, the leak detection function 145 determines whether the corrected prediction error ΔPMV_corr or ΔPMV_ave output by the prediction error correction function 144 is greater than the detection threshold. Further, the leak detection function 145 determines whether the corrected prediction error ΔPMV_corr or ΔPMV_ave output by the prediction error correction function 144 is greater than the detection threshold for a predetermined number of consecutive times greater than or equal to a threshold (hereinafter referred to as "number threshold"). When the corrected prediction error is greater than the detection threshold for the predetermined number of consecutive times greater than or equal to the number threshold, the function 145 determines that a refrigerant leak has occurred and the procedure proceeds to step S5. Otherwise, the procedure returns to step S2.

The timing for determining whether the corrected prediction error ΔPMV_corr or ΔPMV_ave is greater than the detection threshold may be each sampling timing, multiple sampling timings, or every predetermined time (e.g., every hour).

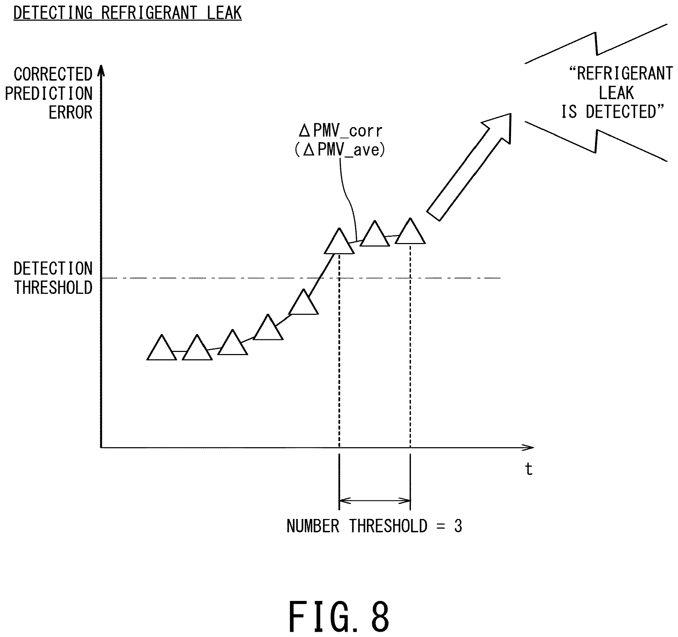

Fig. 8 is an explanatory diagram showing an example of a refrigerant leak detection method based on the corrected prediction error ΔPMV_corr or ΔPMV_ave.

Even in the case of having a refrigeration cycle abnormality other than a refrigerant leak, the expansion valve opening may differ from the normal opening and the detection threshold condition may be met. Therefore, when the corrected prediction error exceeds the detection threshold only once, the refrigerant leak cannot be distinguished from other sudden abnormalities, and it is difficult to determine if a refrigerant leak has occurred.

Meanwhile, when refrigerant begins to leak from any part of the refrigerant piping, the refrigerant leak will worsen unless repairs are made. That is, the refrigerant leak is an irreversible and progressive failure of the refrigeration cycle. Therefore, once the detection threshold condition for determining refrigerant leak is met, the condition will be met continuously thereafter.

Under the circumstances, the leak detection function 145 detects a leak when the corrected prediction error ΔPMV_corr or ΔPMV_ave output by the prediction error correction function 144 is greater than the detection threshold for a consecutive number of sampling times greater than or equal to the number threshold (for example, 10 or more times).

The number threshold is preferably set to an appropriate value according to the frequency of refrigerant leak detection. For example, when the detection frequency is every hour and the number threshold is set to 10, a refrigerant leak is determined when the corrected prediction error is greater than the detection threshold for 10 consecutive hours. Fig. 8 shows an example when the number threshold is 3.

In step S5, the leak detection function 145 outputs the information about a refrigerant leak has been detected by sounds or voices through a speaker not shown in the figure, or by an image on a display not shown in the figure. The leak detection function 145 may also make a service man call via the network connection circuit 13. The term "sounds or voices " here refers to text data being read out through a sound that is recognized by the listener as a human voice. The term "sound" shall include "voice" as well as "music" and "sound effects (such as beeps)".

The above procedure enables accurate detection of the refrigerant leak by taking account of the individual difference of the electronic expansion valve 23.

Next, how the opening prediction function 142 uses deep learning for the opening prediction process is described with reference to Figs. 9-12.

As mentioned above, the opening prediction function 142 can use a look-up table or a single function generated based on the operation data of many other air conditioners in the opening prediction process. However, when a look-up table or a single function is used, there are limitations in the representation of operating conditions, and the prediction accuracy may be low when the refrigeration cycle is unstable (transient state). Therefore, it is preferable for the opening prediction function 142 to perform the opening prediction process using a trained model constructed by deep learning. The effect by using this type of trained model is equivalent to the effect by using stacking multiple functions for calculation, and representation is dramatically improved, whereby the prediction accuracy can be greatly improved in the state where the refrigeration cycle is unstable.

Fig. 9 is an explanatory diagram showing an example of data flow during training of a generalized trained model 50 using the opening prediction function 142.

The opening prediction function 142 sequentially updates the parameter data 52 by performing deep learning using a large number of training data sets. In the case of constructing a trained model for refrigerant leak detection, the neural network may have three or more layers, for example, four layers.

When the number of other devices is about 100 and the sampling interval is about 1 minute, the neural network can be trained accurately if the amount of learning data is about 1 million records. When the number of layers and the amount of learning data are too large, or when the number of other devices is too small, over-fitting may occur and versatility may be lost.

Each set of the many training data sets consists of a pair of learning data 41 and teaching data 42. The learning data 41 is the operation data 411, 412, 413, ..., of each of a number of other air conditioners (hereinafter referred to as "other device"). The operation data 41 includes at least the discharged gas temperature, sucked gas temperature, evaporation pressure, condensation pressure, and compressor operation frequency obtained during normal operation from the other device. The teaching data 42 are the measured openings 421, 422, 423, ..., during normal operation corresponding to the operation data 411, 412, 413, ..., of the other device.

The opening prediction function 142 performs so-called learning by updating the parameter data 52 so that the result of processing the learning data 41 with the neural network 51 approaches the teaching data 42 each time a training data set is given. Generally, when the rate of change of the parameter data 52 converges within a threshold, the learning is considered to be completed. Hereafter, the parameter data 52 after learning is specifically referred to as trained parameter data 52t. The neural network 51 and trained parameter data 52t constitute the generalized trained model 50.

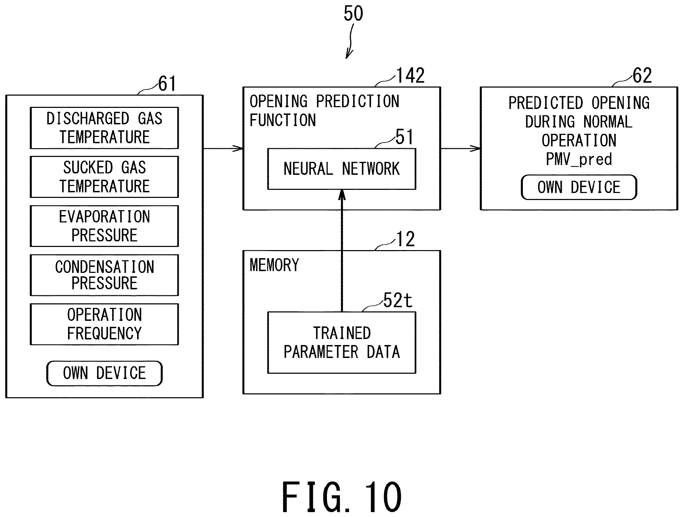

Note that the type of learning data and the type of input data during operation shown in Fig. 10 should match. For example, when data is logged, time-series data of operation data may be input together as learning data, and time-series data of operation data should also be input together during operation. When logged data cannot be handled, a trained model may be constructed using a recurrent neural network (RNN) to sequentially input a series of time-series operation data and output a normal operation predicted opening.

Fig. 10 is an explanatory diagram showing an example of data flow during operation of the generalized trained model 50 using the opening prediction function 142. During operation, the operation data 61 of the air conditioner 11 (hereinafter referred to as "own device") that is the target of the refrigerant leak detection is input to the opening prediction function 142, and the opening prediction function 142 generates a normal operation predicted opening (predicted opening during normal operation) PMV pred 62 using the generalized trained model 50.

The neural network 51 is stored in memory 12 in the form of a program. The trained parameter data 52t may be stored in the memory 12 or in a storage medium connected to the processing circuitry 14 via the network 100. When the generalized trained model 50 (the neural network 51 and the trained parameter data 52t) is stored in the memory 12, the opening prediction function 142, which is realized by the processor of the processing circuitry 14, can generate the normal operation predicted opening PMV pred based on the operation data 61 by reading and executing the generalized trained model 50 from the memory 12.

The generalized trained model 50 may be constructed by an integrated circuit such as an ASIC (Application Specific Integrated Circuit) or FPGA (Field Programmable Gate Array).

In addition, an external device provided with a processor and memory such as the information processing apparatus 101 or a cloud console may be used to realize the function of constructing at least the generalized trained model 50 out of the opening prediction function 142. For example, when using the information processing apparatus 101, the construction function of the information processing apparatus 101 constructs the generalized trained model 50 (see Fig. 9), and the constructed generalized trained model 50 is stored in the memory 12 of the refrigeration cycle apparatus 10. When learning is entrusted to such external device, it is possible to use a device with higher computational processing power than the regeneration cycle apparatus 10 to construct trained models, and the computational load on the regeneration cycle apparatus 10 can be reduced.

Further, the external device may acquire the operation data of the air conditioner 11 from the air conditioner 11 via the network 100, and the external device may generate the normal operation predicted opening PMV pred using the generalized trained model 50 and give it back to the air conditioner 11.

By using the generalized trained model 50 constructed by deep learning based on the operation data of many other devices, compared to the case of using a look-up table or a single function, it is possible to functionalize the model to include complex dynamic behaviors and to generate the highly accurate normal operation predicted opening PMV_pred.

The generalized trained model 50 is constructed using operation data from many other devices. Therefore, the normal operation predicted opening PMV pred output by the generalized trained model 50 has a generic value that ignores individual differences of the electronic expansion valve 23.

In order to construct a trained model that further takes account of the individual differences of the electronic expansion valve 23, the generalized trained model 50 may be re-learned using the operating data of the air conditioner 11 (own device) that is the target of the refrigerant leak detection.

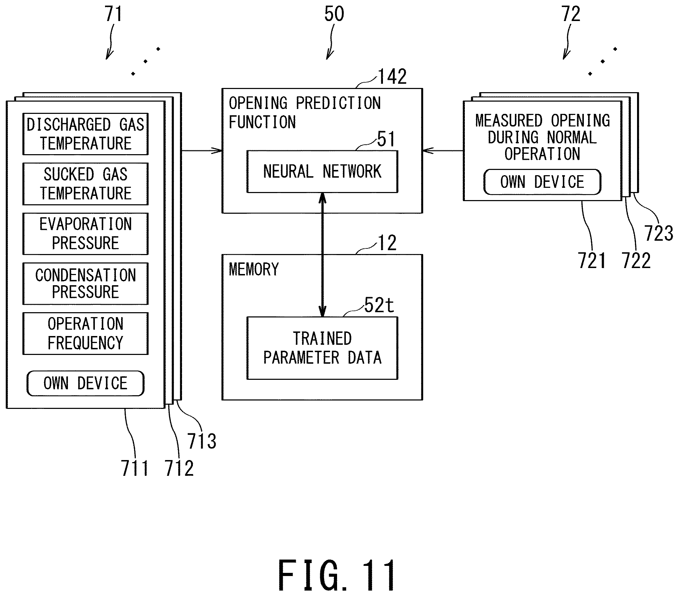

Fig. 11 is an explanatory diagram showing an example of data flow during training of a dedicated trained model 50R using the opening prediction function 142.

In the re-learning of the generalized trained model 50, the learning data 71 is the operation data 711, 712, 713, ..., of the own device including at least the discharged gas temperature, sucked gas temperature, evaporation pressure, condensation pressure, and operation frequency of the compressor 21 of a large number of sampling times obtained during the normal operation of the own device. The teaching data 72 are the measured openings 721, 722, 723, ..., during normal operation corresponding to the operation data 711, 712, 713, ..., of the own device.

The opening prediction function 142 updates the trained parameter data 52t of the generalized trained model 50 so that the result of processing the learning data 71 with the neural network 51 is closer to the teaching data 72 each time a training data set is given, and thereby obtaining the dedicated trained parameter data 52tR. The neural network 51 and the dedicated trained parameter data 52tR constitute the dedicated trained model 50.

By using the generalized trained model 50, the number of training data sets required to construct the dedicated trained model 50 can be greatly reduced.

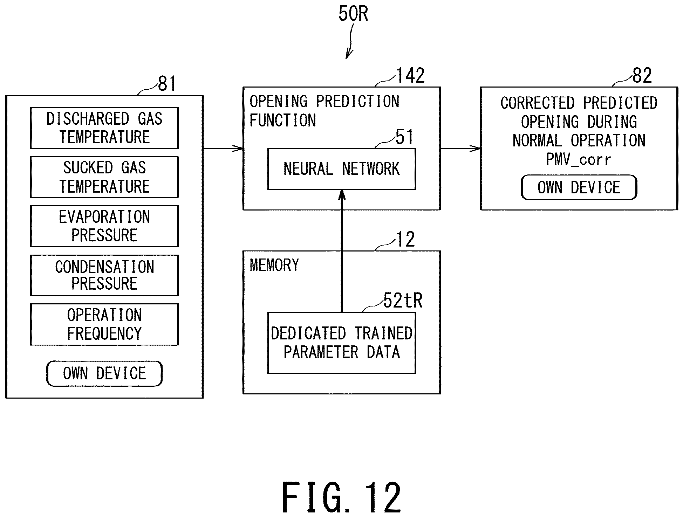

Fig. 12 is an explanatory diagram showing an example of data flow during operation of the dedicated trained model 50R using the opening prediction function 142. During operation, the operation data 81 of the own device is input to the opening prediction function 142, and the opening prediction function 142 uses the dedicated trained model 50R to generate a corrected normal operation predicted opening (corrected predicted opening during normal operation) PMV_corr 82 that is more accurate than the normal operation predicted opening PMV_pred.

The dedicated trained model 50R, as well as the generalized trained model 50, may be realized by the constructing function of an external device such as the information processing apparatus 101 or a cloud console. For example, when using the information processing apparatus 101, the information processing apparatus 101 may acquire the operation data and the measured opening of the electronic expansion valve 23 for a large number of sampling times from the air conditioner 11 via the network 100, and construct the dedicated trained model 50R for the air conditioner 11 by re-learning the generalized trained model 50 using the acquired data as training data sets. In this case, the information processing apparatus 101 stores the dedicated trained model 50R in the memory 12 of the refrigeration cycle apparatus 10. Also in this case, when the generalized trained model 50 (neural network 51 and trained parameter data 52t) is already stored in the memory 12 of the refrigeration cycle apparatus 10, the information processing apparatus 101 may provide only the dedicated trained parameter data 52tR to the regeneration cycle apparatus 10 and replace the trained parameter data 52t stored in the memory 12 with the dedicated trained parameter data 52tR.

The external device may acquire the operation data from the air conditioner 11 via the network 100 from the air conditioner 11, and the external device may generate the corrected normal operation predicted opening PMV_corr using the dedicated trained model 50R and give it to the air conditioner 11.

As explained above, the present invention can accurately detect the leak of the refrigerant by taking account of the individual difference of the electronic expansion valve.

In the above-described embodiments, the term "processor" means, for example, a circuit such as a special-purpose or general-purpose CPU (Central Processing Unit), a special-purpose or general-purpose GPU (Graphics Processing Unit), an ASIC, and a programmable logic device including: an SPLD (Simple Programmable Logic Device); a CPLD (Complex Programmable Logic Device); and an FPGA. When the processor is, for example, a CPU, the processor implements various functions by reading out programs stored in a memory and executing the programs. Additionally, when the processor is, for example, an ASIC, instead of storing the programs in the memory, the functions corresponding to the respective programs are directly incorporated as a logic circuit in the circuit of the processor. In this case, the processor implements various functions by hardware processing in which the programs incorporated in the circuit are read out and executed. Further, the processor can also implement various functions by executing software processing and hardware processing in combination.

Although a description has been given of the case where a single processor of the processing circuitry implements each function in the above-described embodiments, the processing circuitry may be configured by combining a plurality of independent processors which implement the respective functions. When a plurality of processors are provided, the memory for storing the programs may be individually provided for each processor or one memory may collectively store the programs corresponding to the functions of all the processors.

While certain embodiments have been described, these embodiments have been presented by way of example only, and are not intended to limit the scope of the inventions. These embodiments can be implemented in various other aspects, and various omissions, substitutions, changes, and combinations of embodiments can be made without departing from the spirit of the invention. These embodiments and modifications thereof are included in the scope of the invention and the gist thereof, and are also included in the invention described in the claims and the equivalent scope thereof.

**Reference Numeral**

1···refrigerant leak detection system, 10···refrigeration cycle apparatus, 11···air conditioner, 12···memory, 13···network connection circuit, 14···processing circuitry, 21···compressor, 22···condenser, 23···electronic expansion valve, 24···evaporator, 31···discharge temperature sensor, 32···discharge pressure sensor, 33···condensation pressure sensor, 34···evaporation pressure sensor, 35···suction temperature sensor, 36···suction pressure sensor, 50···generalized trained model, 50R···dedicated trained model, 51···neural network, 52t···trained parameter data, 52tR···dedicated trained parameter data, 6101···information processing apparatus, 142···opening prediction function, 143··· prediction error calculation function, 144···prediction error correction function, 145···leak detection function, PMV_offset··· offset value, PMV_corr···corrected normal operation predicted opening, PMV_fact···measured opening, PMV_pred···normal operation predicted opening, $\Delta$PMV···prediction error, $\Delta$PMV_ave···moving average, $\Delta$PMV_corr···corrected prediction error.

**Claims**

1.  A refrigeration cycle apparatus comprising:

    an air conditioner having a compressor, a condenser, an electronic expansion valve, and an evaporator;
    a plurality of sensors detecting discharged gas temperature, sucked gas temperature, evaporation pressure, and condensation pressure of the air conditioner;
    an opening prediction unit configured to determine a predicted opening of the electronic expansion valve at a predetermined sampling interval, based on outputs of the plurality of sensors and an operation frequency of the compressor, assuming normal operation of the air conditioner;
    a prediction error calculation unit configured to calculate a prediction error by subtracting a measured opening of the electronic expansion valve from the predicted opening at the predetermined sampling interval;
    a prediction error correction unit configured to calculate multiple prediction errors for offset calculation using data for a predetermined number of sampling times in advance, calculate an offset value as an average of the multiple prediction errors for the offset calculation, and output a corrected prediction error by subtracting the offset value from the current prediction error; and
    a leak detection unit configured to detect a refrigerant leak of the air conditioner based on the corrected prediction error.

2.  The refrigeration cycle apparatus according to claim 1, wherein:

    the multiple prediction errors for the offset calculation follow a normal distribution; and
    the prediction error correction unit determines the predetermined number of sampling times according to an allowable range of an error of a population mean relative to a sample mean of the multiple prediction errors.

3.  The refrigeration cycle apparatus according to claim 1 or 2, wherein the prediction error correction unit outputs a moving average of the corrected prediction errors over a predetermined period as the corrected prediction error.

4.  The refrigeration cycle apparatus according to any one of claims 1-3, wherein the leak detection unit detects that a refrigerant of the air conditioner has leaked when the corrected prediction error output by the prediction error correction unit is greater than a detection threshold for a predetermined number of consecutive times greater than or equal to a number threshold.

5.  The refrigeration cycle apparatus according to any one of claims 1-4, wherein the opening prediction unit is configured to:

    construct a generalized trained model in advance in which the outputs of the plurality of sensors of a plurality of other air conditioners and the operation frequency of the compressor of the other air conditioners are used as learning data on an input side and measured openings of the electronic expansion valve of the other air conditioners corresponding to the learning data during normal operation are used as teaching data on an output side; and

generate a current predicted opening assuming normal operation of the air conditioner by inputting a current output of the plurality of sensors of the air conditioner and a current operation frequency of the compressor of the air conditioner to the generalized trained model.

6.  The refrigeration cycle apparatus according to claim 5, wherein the opening prediction unit is configured to:

    construct a dedicated trained model for the air conditioner by re-learning the generalized trained model and updating parameters of the generalized trained model in which outputs of the plurality of sensors of the air conditioner and the operation frequency of the compressor of the air conditioner for a second predetermined number of sampling times are used as the learning data on the input side and measured openings of the electronic expansion valve of the air conditioner during normal operation corresponding to the learning data are used as the teaching data on the output side; and
    generate the current predicted opening assuming normal operation of the air conditioner by inputting the current output of the plurality of sensors of the air conditioner and the current operation frequency of the compressor of the air conditioner to the dedicated trained model.

7.  A refrigerant leak detection system comprising:

    a refrigeration cycle apparatus having an air conditioner that includes a compressor, a condenser, an electronic expansion valve, and an evaporator, and a plurality of sensors that detects discharged gas temperature, sucked gas temperature, evaporation pressure, and condensation pressure of the air conditioner; and
    an information processing apparatus communicably connected to the refrigeration cycle device via a network, wherein:

        at least one of the refrigeration cycle apparatus and the information processing apparatus has an opening prediction unit configured to determine a predicted opening of the electronic expansion valve at a predetermined sampling interval, based on outputs of the plurality of sensors and an operation frequency of the compressor, assuming normal operation of the air conditioner;
        the at least one of the refrigeration cycle apparatus and the information processing apparatus has a prediction error calculation unit configured to calculate a prediction error by subtracting a measured opening of the electronic expansion valve from the predicted opening at the predetermined sampling interval;
        the at least one of the refrigeration cycle apparatus and the information processing apparatus has a prediction error correction unit configured to calculate multiple prediction errors for offset calculation using data for a predetermined number of sampling times in advance, calculate an offset value as an average of the multiple prediction errors for the offset calculation, and output a corrected prediction error by subtracting the offset value from the current prediction error; and
        the at least one of the refrigeration cycle apparatus and the information processing apparatus has a leak detection unit configured to detect a refrigerant leak of the air conditioner based on the corrected prediction error.

8.  An information processing apparatus acquiring, via a network, operation data of an air conditioner from a refrigeration cycle apparatus including the air conditioner having a compressor, a condenser, an electronic expansion valve, and an evaporator, the information processing apparatus comprising

    an opening prediction unit configured to:

        construct a generalized trained model in advance in which discharged gas temperature, sucked gas temperature, evaporation pressure, condensation pressure, and an operation frequency of the compressor of a plurality of other air conditioners are used as learning data on an input side and measured openings of the electronic expansion valve of the other air conditioners corresponding to the learning data during normal operation are used as teaching data on an output side, and provide the generalized learned model to the air conditioner via the network;
        from the air conditioner via the network, acquire discharged gas temperature, sucked gas temperature, evaporation pressure, condensation pressure, and an operation frequency of the compressor of the air conditioner for a multiple number of sampling times for the learning data on the input side, and acquire measured openings of the electronic expansion valve of the air conditioner during normal operation corresponding to the learning data for the teaching data on the output side;
        construct a dedicated trained model for the air conditioner by re-learning the generalized trained model and updating parameters of the generalized trained model using the acquired learning data and teaching data as training data set; and

provide the dedicated learned model or the updated parameters to the air conditioner via the network,

wherein the refrigeration cycle apparatus includes:

a conditioner-side opening prediction unit configured to generate a current predicted opening at a predetermined sampling interval assuming normal operation of the air conditioner by inputting a current discharged gas temperature, current sucked gas temperature, current evaporation pressure, and current condensation pressure of the air conditioner and a current operation frequency of the compressor of the air conditioner to the dedicated trained model acquired from the opening prediction unit of the information processing apparatus or the dedicated trained model generated according to the updated parameters acquired from the opening prediction unit of the information processing apparatus;

a prediction error calculation unit configured to calculate a prediction error by subtracting a measured opening of the electronic expansion valve from the predicted opening at the predetermined sampling interval;

a prediction error correction unit configured to calculate multiple prediction errors for offset calculation using data for a predetermined number of sampling times in advance, calculate an offset value as an average of the multiple prediction errors for the offset calculation, and output a corrected prediction error by subtracting the offset value from the current prediction error; and

a leak detection unit configured to detect a refrigerant leak of the air conditioner based on the corrected prediction error.

1

10

REFRIGERATION CYCLE APPARATUS

11

33

32

22

CONDENSER

31

23

COMPRESSOR

21

24

35

EVAPORATOR

12

MEMORY

34

36

14

PROCESSING
CIRCUITRY

13

NETWORK CONNECTION
CIRCUIT

100

101

INFORMATION PROCESSING
APPARATUS

# FIG. 1

~14

PROCESSING CIRCUITRY

~141

ACQUISITION FUNCTION

~142

OPENING PREDICTION FUNCTION

~143

PREDICTION ERROR CALCULATION FUNCTION

~144

PREDICTION ERROR CORRECTION FUNCTION

~145

LEAK DETECTION FUNCTION

FIG. 2

CALCULATING PREDICTION ERROR

FIG. 3

```
                          ┌─────────────┐
                          │    START    │
                          └──────┬──────┘
                                 │
                                 ▼                        ╭─ S1
        ┌────────────────────────────────────────────────┐
        │ CALCULATE OFFSET VALUE PMV_offset BASED ON      │
        │ MULTIPLE PREDICTION ERRORS △PMV IN ADVANCE      │
        └────────────────────────┬───────────────────────┘
                                 │◄──────────────────────────────┐
                                 ▼                        ╭─ S2   │
        ┌────────────────────────────────────────────────┐      │
        │ CALCULATE CURRENT PREDICTION ERROR △PMV         │      │
        │ BY SUBTRACTING CURRENT MEASURED                 │      │
        │ OPENING PMV_fact FROM CURRENT NORMAL            │      │
        │ OPERATION PREDICTED OPENING PMV_pred            │      │
        └────────────────────────┬───────────────────────┘      │
                                 │                        ╭─ S3   │
                                 ▼                               │
        ┌────────────────────────────────────────────────┐      │
        │ CALCULATE CORRECTED PREDICTION ERROR            │      │
        │ △PMV_corr BY SUBTRACTING OFFSET VALUE          │      │
        │ PMV_offset FROM CURRENT PREDICTION ERROR △PMV  │      │
        └────────────────────────┬───────────────────────┘      │
                                 │                               │
                                 ▼                               │
                         IS CORRECTED PREDICTION ERROR   S4      │
                      ≧DETECTION THRESHOLD FOR A PREDETERMINED ──┘ NO
                         NUMBER OF CONSECUTIVE TIMES?
                                 │
                                 │ YES
                                 ▼                        ╭─ S5
        ┌────────────────────────────────────────────────┐
        │ DETECT REFRIGERANT LEAK                         │
        └────────────────────────┬───────────────────────┘
                                 │
                                 ▼
                          ┌─────────────┐
                          │     END     │
                          └─────────────┘
```

# FIG. 4

CALCULATING OFFSET

FIG. 5

OFFSET CORRECTION

FIG. 6

AVERAGING (MOVING AVERAGE)

CORRECTED
PREDICTION
ERROR

DETECTION
THRESHOLD

$\triangle$PMV_corr

MOVING AVERAGE
$\triangle$PMV_ave

t

FIG. 7

DETECTING REFRIGERANT LEAK

FIG. 8

41

DISCHARGED GAS
TEMPERATURE

SUCKED GAS
TEMPERATURE

EVAPORATION
PRESSURE

CONDENSATION
PRESSURE

OPERATION
FREQUENCY

OTHER DEVICE

411  412

413

142

OPENING PREDICTION
FUNCTION

51

NEURAL NETWORK

12

MEMORY

52

PARAMETER DATA

42

MEASURED OPENING
DURING NORMAL
OPERATION

OTHER DEVICE

421  422

423

FIG. 9

50

61

| DISCHARGED GAS TEMPERATURE |
| SUCKED GAS TEMPERATURE |
| EVAPORATION PRESSURE |
| CONDENSATION PRESSURE |
| OPERATION FREQUENCY |

OWN DEVICE

142

OPENING PREDICTION FUNCTION

51

NEURAL NETWORK

12

MEMORY

52t

TRAINED PARAMETER DATA

62

PREDICTED OPENING DURING NORMAL OPERATION PMV_pred

OWN DEVICE

FIG. 10

FIG. 11

50R

| 81 | OPENING PREDICTION FUNCTION /142 | CORRECTED PREDICTED OPENING DURING NORMAL OPERATION PMV_corr /82 |
|---|---|---|
| DISCHARGED GAS TEMPERATURE | NEURAL NETWORK /51 | OWN DEVICE |
| SUCKED GAS TEMPERATURE | | |
| EVAPORATION PRESSURE | MEMORY /12 | |
| CONDENSATION PRESSURE | DEDICATED TRAINED PARAMETER DATA /52tR | |
| OPERATION FREQUENCY | | |
| OWN DEVICE | | |

FIG. 12

| | INTERNATIONAL SEARCH REPORT | International application No. |
|---|---|---|
| | | PCT/JP2021/023630 |

A. CLASSIFICATION OF SUBJECT MATTER
F25B 49/02(2006.01)i
FI: F25B49/02 520M

According to International Patent Classification (IPC) or to both national classification and IPC

B. FIELDS SEARCHED

Minimum documentation searched (classification system followed by classification symbols)
F25B49/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2010-185611 A (DAIKIN IND LTD) 26 August 2010 (2010-08-26) paragraph [0015] | 1-4, 7<br>5-6, 8 |
| Y<br>A | JP 2020-154785 A (FUJITSU LTD) 24 September 2020 (2020-09-24) paragraphs [0053]-[0054] | 1-4, 7<br>5-6, 8 |
| Y<br>A | WO 2015/151363 A1 (MITSUBISHI ELECTRIC CORP) 08 October 2015 (2015-10-08) paragraphs [0123]-[0128] | 1-4, 7<br>5-6, 8 |
| Y<br>A | JP 2014-224612 A (PANASONIC CORP) 04 December 2014 (2014-12-04) paragraph [0002] | 1-4, 7<br>5-6, 8 |
| Y | JP 2017-105294 A (HITACHI AUTOMOTIVE SYSTEMS LTD) 15 June 2017 (2017-06-15) paragraphs [0088]-[0090] | 2-4 |

☒ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 July 2021 (08.07.2021) | 03 August 2021 (03.08.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2021/023630 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 9-138206 A (FIGARO ENG INC) 27 May 1997 (1997-05-27) paragraphs [0008]-[0009] | 3-4 |
| Y | WO 2018/220758 A1 (MITSUBISHI ELECTRIC CORP) 06 December 2018 (2018-12-06) paragraph [0090] | 4 |

**INTERNATIONAL SEARCH REPORT**
Information on patent family members

| International application no. |
|---|
| PCT/JP2021/023630 |

| Patent Documents referred in the Report | Publication Date | Patent Family | Publication Date |
|---|---|---|---|
| JP 2010-185611 A | 26 Aug. 2010 | (Family: none) | |
| JP 2020-154785 A | 24 Sep. 2020 | (Family: none) | |
| WO 2015/151363 A1 | 08 Oct. 2015 | (Family: none) | |
| JP 2014-224612 A | 04 Dec. 2014 | (Family: none) | |
| JP 2017-105294 A | 15 Jun. 2017 | (Family: none) | |
| JP 9-138206 A | 27 May 1997 | (Family: none) | |
| WO 2018/220758 A1 | 06 Dec. 2018 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015125509 A1